# EUROPÄISCHE PATENTANMELDUNG

(11) **EP 0 532 906 A1**
(43) Veröffentlichungstag der Anmeldung: **24.03.1993**
(21) Anmeldenummer: 92113724.6
(22) Anmeldetag: 12.08.1992
(51) Int. Cl.: G03B 21/56

(54) **Verschiebbare Rollbildwand**

(30) Priorität: 18.09.1991 DE 9111609 U
(71) Anmelder: MECHANISCHE WEBEREI GMBH & CO., D-33175 Bad Lippspringe (DE)
(72) Erfinder: Sperber, Georg, W-4792 Bad Lippspringe (DE)
(74) Vertreter: Thielking, Bodo, Dipl.-Ing.

(57) **Zusammenfassung**

Das Gehäuse (9) einer Rollbildwand, die mittels Laufrollen in einer Führungsschiene (6) in der Bildwandebene verschiebbar ist, ist an mindestens einem Laufwagen (8) angeordnet. Dieser Laufwagen läuft in der Führungsschiene (6) ab und ist von einem Trum (1a) eines band- oder seilförmigen Elements (1) antreibbar, das über zwei Räder oder Scheiben (2; 7) umläuft. Dabei ist ein Rad oder eine Scheibe angetrieben und ein elektrisches Zuleitungskabel (5) zu dem Rohrmotor (10) der Wickelwelle der Rollbildwand geführt.

## Beschreibung

Die Erfindung betrifft eine Rollbildwand, die mittels Laufrollen in einer Führungsschiene in der Bildwandebene verschiebbar ist.

Bei bekannten Rollbildwänden dieser Art wird das Verschieben üblicherweise von Hand vorgenommen.

Der Erfindung liegt die Aufgabe zugrunde, eine Rollbildwand so auszubilden, daß ein motorischer Antrieb einfach möglich ist.

Die Lösung dieser Aufgabe erfolgt dadurch, daß die Rollbildwand bzw. deren Gehäuse an mindestens einem Laufwagen angeordnet ist, der in der Führungsschiene abläuft und von einem Trum eines über zwei Räder oder Scheiben umlaufenden band- oder seilförmigen Elementes antreibbar ist, wobei ein Rad oder eine Scheibe angetrieben und ein elektrisches Zuleitungskabel zu dem Rohrmotor der Wickelwelle der Rollbildwand geführt ist.

Es hat sich als besonders zweckmäßig erwiesen, daß das bandförmige Element ein Zahnriemen ist und die Scheiben Riemenscheiben sind.

Schließlich wird erfindungsgemäß noch vorgeschlagen, daß das elektrische Zuleitungskabel zu dem Rohrmotor der Wickelwelle ein Spiralkabel ist.

Die Erfindung zeigt eine einfache Lösung für eine elektrisch antreibbare und verschiebbare Rollbildwand.

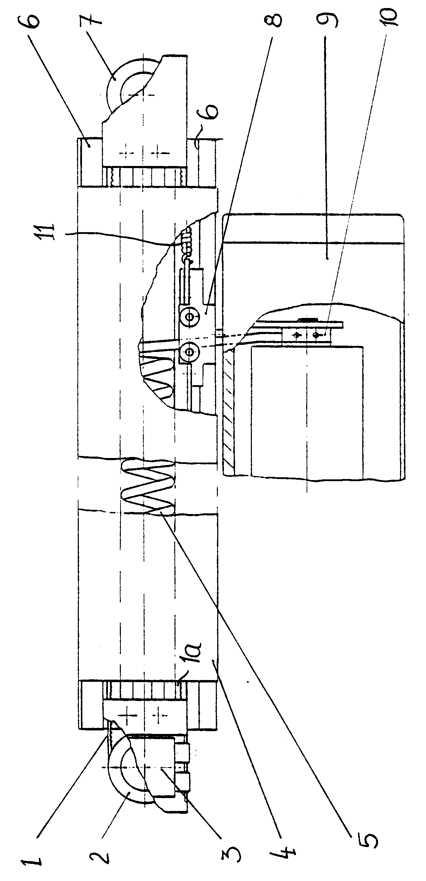

Nachstehend wird eine bevorzugte Ausführungsform der Erfindung anhand der Zeichnung im einzelnen beschrieben.

Eine ortsfeste Führungsschiene 6 besitzt an ihrer Frontseite eine Blende 4.

Auf zwei horizontalen Schenkeln der Führungsschiene 6, die zueinander gerichtet sind und durch einen Spalt voneinander getrennt sind, laufen Laufrollen eines doppelt vorgesehenen, jedoch nur einfach dargestellten Laufwagens 8 ab. Die beiden Laufwagen 8 sind mit dem unteren Trum 1a eines band- oder seilförmigen Elements 1 verbunden, das über zwei Räder oder Scheiben 2 und 7 umläuft. Im dargestellten Ausführungsbeispiel ist das bandförmige Element 1 ein Zahnriemen und es sind die Scheiben 2 und 7 Zahnriemenscheiben. Ein Elektromotor 3 treibt die Scheibe 2 an. Je nach Drehrichtung wandern die Laufwagen 8 nach rechts oder links und nehmen das an die Laufwagen angehängte Gehäuse 9 dabei mit. Im Gehäuse 9 ist der Rohrmotor 10 für die Wickelwelle der Lichtbildwand vorgesehen. Der Rohrmotor 10 ist über ein Spiralkabel 5 an der Welle angeschlossen.

Sowohl das seitliche Verfahren der Lichtbildwand als auch das Aufrollen und Abrollen der Lichtbildwand erfolgt über den elektrischen Antrieb.

Im unteren Trum 1a ist eine Spannfeder 11 vorgesehen, die zur Montageerleichterung dient und sowohl als Spannvorrichtung als auch als Ruckdämpfer dient.

## Patentansprüche

1. Rollbildwand, die mittels Laufrollen in einer Führungsschiene in der Bildwandebene verschiebbar ist,
dadurch gekennzeichnet,
daß die Rollbildwand bzw. deren Gehäuse (9) an mindestens einem Laufwagen (8) angeordnet ist, der in der Führungsschiene (6) abläuft und von einem Trum (1a) eines über zwei Räder oder Scheiben (2; 7) umlaufenden band- oder seilförmigen Elements (1) antreibbar ist, wobei ein Rad oder eine Scheibe angetrieben und ein elektrisches Zuleitungskabel (5) zu dem Rohrmotor (10) der Wickelwelle der Rollbildwand geführt ist.

2. Rollbildwand nach Anspruch 1,
dadurch gekennzeichnet,
daß das bandförmige Element (1) ein Zahnriemen ist und die Scheiben (2; 7) Riemenscheiben sind.

3. Rollbildwand nach Anspruch 1 oder 2,
dadurch gekennzeichnet,
daß das elektrische Zuleitungskabel zu dem Rohrmotor (10) der Wickelwelle ein Spiralkabel (5) ist.
